# EUROPEAN PATENT APPLICATION

(11) **EP 4 742 782 A1**
(43) Date of publication of application: **13.05.2026**
(21) Application number: 23943983.9
(22) Date of filing: 03.07.2023
(51) Int. Cl.: H04W 60/00

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: YANG, Haorui, Dongguan, Guangdong 523860 (CN)
(74) Representative: RGTH
(86) International application number: PCT/CN2023/105564
(87) International publication number: WO 2025/007249

(57) **Abstract**

Embodiments of the present application provide a communication method and a device. The communication method comprises: a terminal device sending a registration request message to a first network element, the registration request message carrying identification information of the terminal device; and the terminal device receiving a registration acceptance message from the first network element. In the embodiments of the present application, the adverse effect of an SOR mechanism on a zero-power device can be reduced.

## Description

### TECHNICAL FIELD

The present application relates to the field of communications, and in particular, to a communication method and a device.

### BACKGROUND

In the related art, terminal devices are required to support steering of roaming (SOR) technology. The SOR technology is a technology that a home public land mobile network (HPLMN) of the terminal device switches the terminal device to another visited public land mobile network (VPLMN). The network side transmits SOR information to the terminal device, and the SOR information includes a priority list of VPLMNs and access technologies, and timers for corresponding services. After receiving the SOR information, the user equipment (UE) enters an idle state after the timer expires and then performs network selection using the priority list of VPLMNs and access technologies. Zero-power terminals do not need built-in batteries and are simple-designed terminal devices. However, the overall design of the SOR technology is too complex for zero-power devices. Therefore, how to reduce adverse effects of the SOR mechanism on zero-power devices is a technical problem that needs to be solved.

### SUMMARY

Embodiments of the present application provide a communication method and a device, which may reduce the adverse effects of the SOR mechanism on zero-power devices.

Embodiments of the present application provide a communication method, including:
transmitting, by a terminal device, a registration request message to a first network element, where the registration request message carries identification information of the terminal device; and
receiving, by the terminal device, a registration acceptance message from the first network element.

Embodiments of the present application provide a communication method, including:
receiving, by a first network element, a second message from a second network element, where the second message carries identification information of a terminal device; and
transmitting, by the first network element, a registration acceptance message to the terminal device.

Embodiments of the present application provide a communication method, including:
transmitting, by a second network element, a second message to a first network element, where the second message carries identification information of a terminal device.

Embodiments of the present application provide a communication method, including:
receiving, by a third network element, at least one of identification information of a terminal device, a location of the terminal device, a frequency band supported by the terminal device, or a first indication from a second network element; where the first indication is used to indicate whether the terminal device is a zero-power terminal; and
determining, by the third network element, steering of roaming (SOR) information of the terminal device.

Embodiments of the present application provide a communication method, including:
receiving, by an access device, a registration request message from a terminal device, where the registration request message carries identification information of the terminal device; and
forwarding, by the access device, the registration request message to a first network element.

Embodiments of the present application provide a terminal device, including:
a first transmitting unit, configured to transmit a registration request message to a first network element, where the registration request message carries identification information of the terminal device; and
a first receiving unit, configured to receive a registration acceptance message from the first network element.

Embodiments of the present application provide a first network element, including:
a third receiving unit, configured to receive a second message from a second network element, where the second message carries identification information of a terminal device; and
a second transmitting unit, configured to transmit a registration acceptance message to the terminal device.

Embodiments of the present application provide a second network element, including:
a fifth transmitting unit, configured to transmit a second message to a first network element, where the second message carries identification information of a terminal device.

Embodiments of the present application provide a third network element, including:
a seventh receiving unit, configured to receive at least one of identification information of a terminal device, a location of the terminal device, a frequency band supported by the terminal device, or a first indication from a second network element; where the first indication is used to indicate whether the terminal device is a zero-power terminal; and
a fourth determining unit, configured to determine SOR information of the terminal device.

Embodiments of the present application provide an access device, including:
an eighth receiving unit, configured to receive a registration request message from a terminal device, where the registration request message carries identification information of the terminal device; and
an eighth transmitting unit, configured to forward the registration request message to a first network element.

Embodiments of the present application provide a terminal device, including a processor and a memory. The memory is configured to store a computer program, and the processor is configured to call the computer program stored in the memory and run the computer program, to enable the terminal device to perform the above communication method.

Embodiments of the present application provide a chip, configured to implement the above communication method.

Specifically, the chip includes a processor, and the processor is configured to call a computer program from a memory and run the computer program, to enable a device equipped with the chip to perform the above communication method.

Embodiments of the present application provide a computer-readable storage medium, configured to store a computer program. The computer program, when executed by a device, enables the device to perform the above communication method.

Embodiments of the present application provide a computer program product, the computer program product includes computer program instructions, and the computer program instructions enable a computer to perform the above communication method.

Embodiments of the present application provide a computer program, and the computer program when executed on a computer, enables the computer to perform the above communication method.

In the embodiments of the present application, a terminal device transmits a registration request message to a first network element, and the first network element receives a second message from a second network element based on the registration request message, and transmits a registration acceptance message to the terminal device; and the terminal device receives the registration acceptance message. In this way, the first network element may determine information carried in the registration acceptance message based on whether the terminal device is a zero-power device, so as to reduce the adverse effects of the SOR mechanism on the zero-power device.

### BRIEF DESCRIPTION OF THE DRAWINGS

FIG. 1 is a schematic diagram of an application scenario of the embodiments of the present application.
FIG. 2 is a schematic diagram of a zero-power terminal.
FIG. 3 is a schematic diagram of a 5G system architecture.
FIG. 4 is a schematic flowchart of a communication method 400 according to embodiments of the present application.
FIG. 5 is a schematic flowchart of a communication method 500 according to embodiments of the present application.
FIG. 6A is a schematic flowchart of a communication method 600 according to embodiments of the present application.
FIG. 6B is another schematic flowchart of a communication method 600 according to embodiments of the present application.
FIG. 7A is a schematic flowchart of a communication method 700 according to embodiments of the present application.
FIG. 7B is another schematic flowchart of a communication method 700 according to embodiments of the present application.
FIG. 8 is a schematic flowchart of a communication method 800 according to embodiments of the present application.
FIG. 9 is a schematic flowchart of a communication method 900 according to embodiments of the present application.
FIG. 10 is an implementation flowchart of Embodiment I of the present application.
FIG. 11 is an implementation flowchart of Embodiment II of the present application.
FIG. 12 is an implementation flowchart of Embodiment III of the present application.
FIG. 13 is a schematic structural diagram of a terminal device 1300 according to embodiments of the present application.
FIG. 14 is a schematic structural diagram of a terminal device 1400 according to embodiments of the present application.
FIG. 15 is a schematic structural diagram of a first network element 1500 according to embodiments of the present application.
FIG. 16 is a schematic structural diagram of a first network element 1600 according to embodiments of the present application.
FIG. 17 is a schematic structural diagram of a second network element 1700 according to embodiments of the present application.
FIG. 18 is a schematic structural diagram of a second network element 1800 according to embodiments of the present application.
FIG. 19 is a schematic structural diagram of a third network element 1900 according to embodiments of the present application.
FIG. 20 is a schematic structural diagram of a third network element 2000 according to embodiments of the present application.
FIG. 21 is a schematic structural diagram of an access device 2100 according to embodiments of the present application.
FIG. 22 is a schematic structural diagram of an access device 2200 according to embodiments of the present application.
FIG. 23 is a schematic structural diagram of a communication device 2300 according to embodiments of the present application.
FIG. 24 is a schematic structural diagram of a chip 2400 according to embodiments of the present application.

### DETAILED DESCRIPTION

The technical solutions in the embodiments of the present application will be described below in conjunction with the accompanying drawings in the embodiments of the present application.

It should be noted that, the terms "first", "second", etc. in the description and claims of the embodiments of the present application and the accompanying drawings are used to distinguish similar objects, and are not necessarily used to describe a specific order or sequence, and the objects described with "first" and "second" may be the same or different.

The technical solutions in the embodiments of the present application may be applied to various communication systems, such as: a global system of mobile communications (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi) system, a 5th-Generation (5G) communication system, or other communication systems.

Generally, the number of connections supported by a traditional communication system is limited and is easy to implement. However, with the development of the communication technology, the mobile communication system will not only support the traditional communication, but also support, for example, device to device (D2D) communication, machine to machine (M2M) communication, machine type communication (MTC), vehicle to vehicle (V2V) communication, or vehicle to everything (V2X) communication, and the embodiments of the present application may also be applied to these communication systems.

In an implementation, the communication system in the embodiments of the present application may be applied to a carrier aggregation (CA) scenario, a dual connectivity (DC) scenario, or a standalone (SA) networking scenario.

In an implementation, the communication system in the embodiments of the present application may be applied to an unlicensed spectrum, where the unlicensed spectrum may also be considered as a shared spectrum; or the communication system in the embodiments of the present application may be applied to a licensed spectrum, where the licensed spectrum may also be considered as an unshared spectrum.

The embodiments of the present application describe various embodiments in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, or a user apparatus.

The terminal device may be a station (ST) in WLAN, and the ST may be a cellular phone, a cordless phone, a session initiation protocol (SIP) phone, a wireless local loop (WLL) station, a personal digital assistant (PDA) device, a handheld device with a wireless communication function, a computing device or another processing device connected to a wireless modem, an in-vehicle device, a wearable device, a terminal device in a next-generation communication system (e.g., an NR network), or a terminal device in a future evolved public land mobile network (PLMN).

In the embodiments of the present application, the terminal device may be deployed on land, including indoor or outdoor, handheld, wearable, or in-vehicle; or the terminal device may be deployed on water (e.g., on a ship); or the terminal device may be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

By way of example rather than limitation, in the embodiments of the present application, the terminal device may also be a wearable device. The wearable device, which may also be referred to as a wearable smart device, is a general term for wearable devices that are developed by intelligent design on daily wears by using a wearable technology and can be worn, such as glasses, gloves, watches, clothing, and shoes. The wearable device is a portable device that is worn directly on the body, or integrated into the user's clothing or accessories. The wearable device is not only a hardware device, but also implements powerful functions through software support as well as data interaction or cloud interaction. Generalized wearable smart devices include devices that have full functions and large sizes, and may implement all or part of functions without relying on smart phones, such as smart watches or smart glasses, and include devices that focus on a certain type of application functions only and need to be used in conjunction with other devices (such as smart phones), such as various smart bracelets or smart jewelries for monitoring physical signs.

In the embodiments of the present application, the network device may be a device for communicating with a mobile device. The network device may be an access point (AP) in WLAN, a base station (base transceiver station, BTS) in GSM or CDMA, or a base station (NodeB, NB) in WCDMA; or the network device may be an evolutional base station (evolutional NodeB, eNB or eNodeB) in LTE, a relay station or access point, a network device (gNB) in an in-vehicle device, a wearable device, a network device (gNB) in an NR network, a network device in a future evolved PLMN network, or a network device in an NTN network, etc.

By way of example rather than limitation, in the embodiments of the present application, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station arranged on land or in water.

In the embodiments of the present application, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station, or belong to a base station corresponding to a small cell. The small cells here may include: a metro cell, a micro cell, a pico cell, a femto cell, etc. These small cells have characteristics of small coverage and low transmission power, and are suitable for providing high-speed data transmission services.

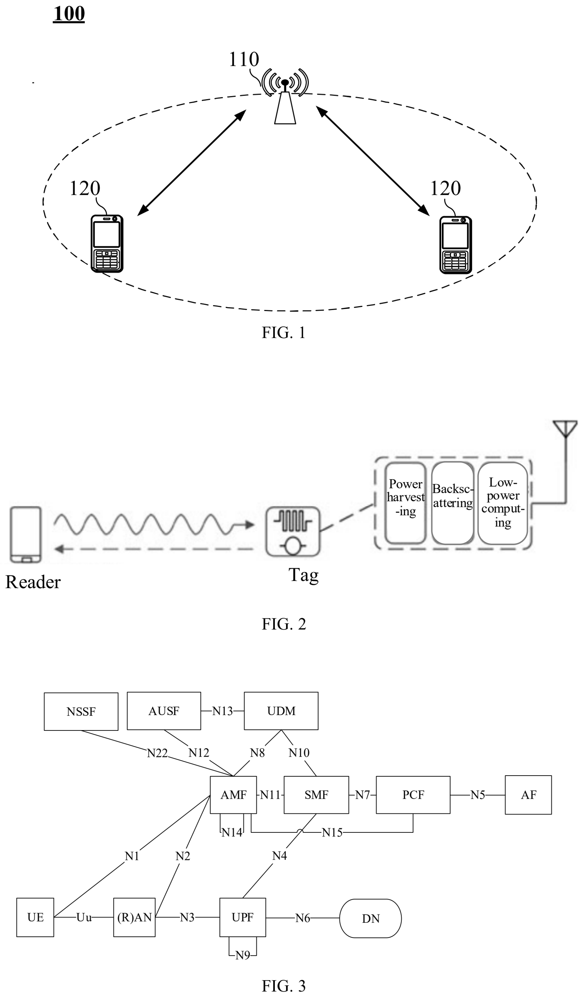

FIG. 1 illustrates a communication system 100. The communication system includes a network device 110 and two terminal devices 120. In an implementation, the communication system 100 may include multiple network devices 110, and there are another number of terminal devices 120 in a coverage area of each network device 110, which is not limited in the embodiments of the present application.

In an implementation, the communication system 100 may further include other network entities such as a mobility management entity (MME) and an access and mobility management function (AMF), which is not limited in the embodiments of the present application.

The network devices may include an access network device and a core network device. That is, the wireless communication system further includes multiple core networks for communicating with access network devices. The access network device may be an evolutional base station (evolutional node B, eNB or e-NodeB), a macro base station, a micro base station (also called a "small base station"), a pico base station, an access point (AP), a transmission point (TP) or a new generation Node B (gNodeB) in a long-term evolution (LTE) system, a next-generation system (mobile communication system) (new radio, NR) or an authorized auxiliary access long-term evolution (LAA-LTE) system.

It should be understood that a device with a communication function in a network/system in the embodiments of the present application may be referred to as a communication device. In an example of the communication system shown in FIG. 1, the communication devices may include the network device and the terminal device, which have the communication function. The network device and the terminal device may be specific devices in the embodiments of the present application. The communication devices may further include other devices in the communication system, such as a network controller, a mobile management entity and other network entities, which are not limited to the embodiments of the present application.

It should be understood that the terms "system" and "network" are often used interchangeably herein. The term "and/or" used herein is only an association relationship for describing associated objects, which indicates that there may be three kinds of relationships. For example, "A and/or B" may represent three situations that: A exists alone, both A and B exists, and B exists alone. In addition, the character "/" used herein generally indicates that associated objects before and after this character are in an "or" relationship.

It should be understood that the "indicate" mentioned in the embodiments of the present application may mean a direct indication or an indirect indication, or may represent that there is an association relationship. For example, A indicates B, which may mean that A directly indicates B (for example, B may be obtained by A), or that A indirectly indicates B (for example, A indicates C, and B may be obtained by C), or that there is an association relationship between A and B.

The term "correspond" described in the embodiments of the present application may mean a direct or indirect correspondence between the two, or an association relationship between the two, or mean a relationship such as indicating and being indicated, or configuring and being configured.

To facilitate understanding of the technical solutions in the embodiments of the present application, the related technologies of the embodiments of the present application are described below. The following related technologies, as optional solutions, may be arbitrarily combined with the technical solutions in the embodiments of the present application, and those combined solutions all belong to the protection scope of the embodiments of the present application.

The zero-power communication network is a wireless communication technology suitable for short distance and low rate. Zero-power devices have the advantage of device nodes not carrying power supply by mainly combining radio frequency power harvesting technology, backscattering technology, and low-power computing technology. FIG. 2 is a schematic diagram of a zero-power terminal.

The core of the radio frequency power harvesting is to convert radio frequency power into direct current. The power may be stored in a battery or capacitor, or may be directly used to drive a logic circuit, digital chip or sensor device after harvesting, to complete modulation and transmission of a backscattered signal, collection and processing of sensor information, as well as other functions and applications.

With the development of 5G systems, there is a demand for 5G systems to support zero-power terminal access to the network. The main scenarios have the following characteristics:
- extreme environment and not suitable for ordinary terminals to work;
- terminals using very low power and cost; and
- terminals without batteries.

Zero-power communication systems may be applied in scenarios such as wireless industrial sensing networks, smart agriculture, smart warehousing and logistics, and smart homes.

Based on the power source and usage of zero-power terminals, the zero-power terminals may be divided into the following types:

### 1) Passive zero-power terminal

The zero-power terminal does not need a built-in battery. When the zero-power terminal is close to a network device (e.g., a reader/writer of a radio frequency identification (RFID) system), the zero-power terminal is located within a near-field range formed by radiation of an antenna of the network device. The antenna of the zero-power terminal generates an induced current through electromagnetic induction, and the induced current drives a low-power chip circuit of the zero-power terminal, to implement signal demodulation of a forward link, signal modulation of a backward link, etc. For a backscattering link, the zero-power terminal transmits signals in a backscattering manner.

It can be seen that the passive zero-power terminal does not need the built-in battery to drive either the forward link or the backward link, and is a true zero-power terminal.

The passive zero-power terminal does not need the battery, and a radio frequency circuit and a baseband circuit of the passive zero-power terminal are both very simple. For example, the passive zero-power terminal does not need a low-noise amplifier (LNA), a power amplifier (PA), a crystal oscillator, an analog-to-digital converter (ADC), etc. Therefore, the passive zero-power terminal has many advantages such as small size, light weight, very low price, and long service life.

This type of terminal devices may further have the following characteristics: 1) no battery; 2) harvesting power from surrounding environments (such as radio waves, solar energy, wind energy, and mechanical kinetic energy); 3) no universal subscriber identity module (USIM) card. This type of terminal devices may further store a certain amount of power through the surrounding environments, but the power is very small; and therefore, functional logic supported by this type of terminal devices is much less than that of ordinary mobile phone terminals.

### 2) Semi-passive zero-power terminal

The semi-passive zero-power terminal itself is not equipped with a conventional battery, but can use a radio frequency (RF) power harvesting module to harvest radio wave power; and simultaneously, the semi-passive zero-power terminal stores the harvested power in a power storage unit (such as a capacitor). The power storage unit, after obtaining the power, may drive a low-power chip circuit of the zero-power terminal, to implement signal demodulation of a forward link, signal modulation of a backward link, etc. For a backscattering link, the zero-power terminal transmits signals in a backscattering manner.

It can be seen that the semi-passive zero-power terminal does not need the built-in battery to drive either the forward link or the backward link. Although the power stored in the capacitor is used in operation, the power comes from the radio power harvested by the power harvesting module. Therefore, the semi-passive zero-power terminal is also a true zero-power terminal.

The semi-passive zero-power terminal inherits many of the advantages of the passive zero-power terminal. Therefore, the semi-passive zero-power terminal has many advantages such as small size, light weight, very low price, and long service life.

### 3) Active zero-power terminal

The zero-power terminal used in some scenarios may also be an active zero-power terminal. This type of terminals can have built-in batteries. The battery is used to drive a low-power chip circuit of the zero-power terminal, to implement signal demodulation of a forward link, signal modulation of a backward link, etc. However, for a backscattering link, the zero-power terminal transmits signals in a backscattering manner. Therefore, the zero power consumption of this type of terminals is mainly reflected in the fact that the signal transmission of the backward link does not need the power of the terminal itself, but uses the backscattering manner.

The active zero-power terminal has the built-in battery for supplying power to the RFID chip, to increase a reading and write distance of a tag, thereby improving communication reliability. Therefore, the active zero-power terminal may be applied in some scenarios with relatively high requirements on a communication distance, a reading delay, etc.

The zero-power terminal may be directly connected to a base station, or may be connected to a base station through a relay device. The former is called a direct mode and the latter is called an indirect mode.

During the standardization discussion process, the zero-power internet of things device may also be referred to as an ambient power enabled Internet of Things (AIoT) device, or an ambient IoT device for short, and in some technical literature, it may also be referred to as a passive IoT device. The so-called AIoT device refers to an IoT device that use various environment energies such as wireless radio frequency energy, light energy, solar energy, thermal energy, mechanical energy, and other environmental energies to drive itself. This type of devices can have no power storage capability or can have a very limited power storage capability (e.g., have a capacitor with a capacity of tens of uF). Compared with existing IoT devices, the ambient IoT devices have many advantages such as no conventional battery, no maintenance, small size, low complexity, low cost, and long life cycle. FIG. 3 is a schematic diagram of a 5G system architecture.

In related technologies, the UE needs to support steering of roaming (SOR). SOR is a technology that a home public land mobile network (HPLMN) of the UE switches the UE to another visited public land mobile network (VPLMN). The HPLMN transmits a priority list of VPLMNs and access technologies specified by the HPLMN to the UE through a non-access stratum (NAS) signaling. After receiving the list, the UE immediately enters the idle state and uses the list to select a new VPLMN.

With the development of technology, in related technologies, the UE is required to support SOR and SOR-connected mode control information (CMCI). The SOR-CMCI includes timers corresponding to various services, and the UE enters the idle state and performs network selection after the timer(s) corresponding to the service(s) (which may include multiple services) used by the UE expire.

The SOR information transmitted by the network device to the terminal device may be carried in an SOR transparent container information element (IE). Table 1 is an example of a format of an SOR transparent container IE.

**Table 1**

| 8 | 7 | 6 | 5 | 4 | 3 | 2 | 1 | |
|---|---|---|---|---|---|---|---|---|
| SOR transparent container IEI | | | | | | | | octet 1 |
| Length of SOR transparent container contents | | | | | | | | octet 2 |
| | | | | | | | | octet 3 |
| SPR header (SOR header) | | | | | | | | octet 4 |
| SOR-MAC-I_{AUSF} | | | | | | | | octet 5 |
| | | | | | | | | octet 20 |
| Counter_{SOR} | | | | | | | | octet 21 |
| | | | | | | | | octet 22 |
| Length of PLMN ID and access technology list | | | | | | | | octet 23* |
| PLMN ID and access technology list | | | | | | | | octet 24* |
| | | | | | | | | octet m* |
| 0 Spare | 0 Spare | 0 Spare | 0 Spare | 0 Spare | SSSI | SSCMI | SI | octet o |
| SOR-CMCI | | | | | | | | octet (o+1)* |
| | | | | | | | | octet p* |
| SOR-SNPN-SI | | | | | | | | octet (p+1)* |
| | | | | | | | | octet u* |

For the zero-power device, due to very simple design, the overall design of SOR is too complicated for the zero-power device. Since related technologies stipulate that supporting SOR is a mandatory feature of the terminal device, the network side desires the zero-power terminal to report information related to SOR. However, if the zero-power terminal unilaterally does not support SOR, the network side will not be able to receive information related to SOR; and in this case, the network side will believe that the terminal-side protocol design is wrong because the desire does not match the actual situation, and then refuse the terminal access to the network, thereby affecting the services of the terminal.

Therefore, how to enable zero-power terminals to avoid complex SOR mechanisms is a technical problem that needs to be solved.

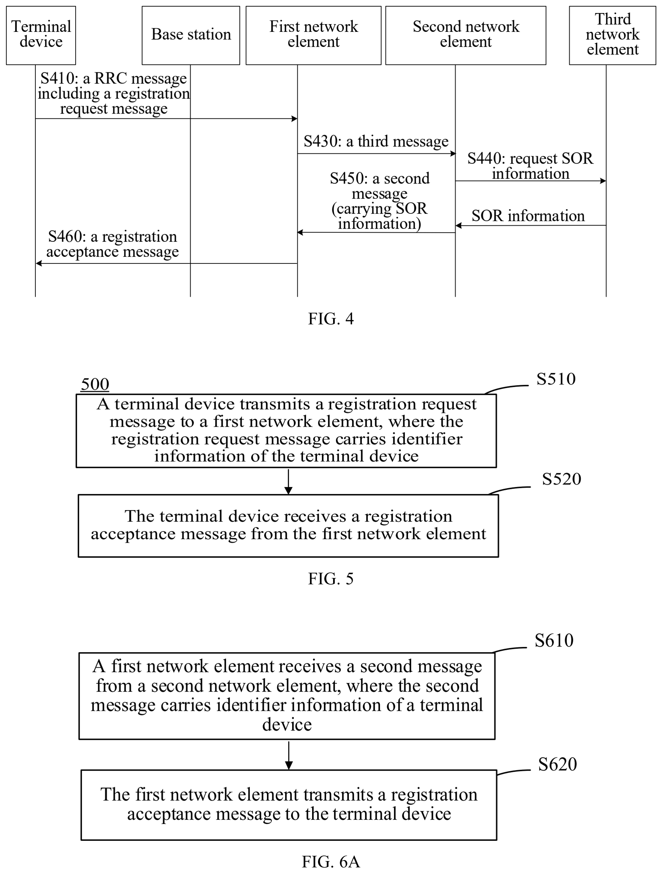

The embodiments of the present application propose several communication methods, which involve at least one of a terminal device, an access device, a first network element, a second network element, or a third network element. The terminal device may include a zero-power terminal, such as an AIoT terminal; or the terminal device may include a terminal in terminals of other types other than the zero-power terminal. The access device may include a base station. The first network element may include a core network device, such as an AMF. The second network element may include a device such as a UDM or UDR. The third network element may include an application function network element related to SOR, such as an SOR-application function (SOR-AF). FIG. 4 is a schematic flowchart of a communication method 400 according to embodiments of the present application, and the communication method involves the multiple devices mentioned above. The method includes at least part of the following.

In S410, the terminal device transmits a registration request message to the first network element, where the registration request message carries identification information of the terminal device. The registration request message may further carry a first indication and/or a frequency band supported by the terminal device, where the first indication may be used to indicate whether the terminal device is a zero-power terminal. For example, the terminal device transmits a radio resource control (RRC) message including the registration request message to the first network element.

The registration request message may be forwarded to the first network element through the access device. In some implementations, the access device may further identify an access technology used by the terminal device, and transmit the access technology used by the terminal device and/or a location of the terminal device to the first network element. The location of the terminal device may include a tracking area identity (TAI) where the terminal device is located. In a case where the terminal device is the zero-power terminal and the access technology used by the terminal device is an access technology specific to zero-power terminals, the access device may indicate to the first network element that the terminal device uses the access technology specific to zero-power terminals.

In S430, the first network element can determine whether the terminal device is the zero-power terminal based on the first indication carried in the registration request message and/or the access technology used by the terminal device; and in a case where the terminal device is the zero-power terminal, the first network element may transmit a third message to the second network element, where the third message carries at least one of the identification information of the terminal device, the location of the terminal device, the frequency band supported by the terminal device, or the first indication. The first indication may be obtained from the registration request message that is received from the terminal device, or may be generated by the first network element based on a determination result of determining, using the access technology used by the terminal device, whether the terminal device is the zero-power terminal. In some examples, the third message may include a user data management acquisition (Nudm_SubscriberDataManagement_Get) message or a user equipment context management update (Nudm_UEContextManagement_Update) message.

In S440, the second network element determines SOR information of the terminal device based on at least one of the identification information of the terminal device, the location of the terminal device, the frequency band supported by the terminal device, or the first indication. In a case where the second network element cannot determine the SOR information of the terminal device, the second network element may transmit the at least one of the identification information of the terminal device, the location of the terminal device, the frequency band supported by the terminal device or the first indication to the third network element. The third network element determines the SOR information of the terminal device based on the at least one of the identification information of the terminal device, the location of the terminal device, the frequency band supported by the terminal device or the first indication, and feeds back the SOR information of the terminal device to the second network element. In a case where the terminal device is the zero-power terminal, the second network element or the third network element may determine simplified SOR information for the zero-power terminal.

Specifically, the method for simplifying the SOR information may include one or more of the following.
(1) The SOR information does not include an access technology.
   For example, in a case where the zero-power terminal uses a specific access technology, it is not necessary to include the access technology in a network identifier and access technology list (a PLMN ID and access technology list) field of an SOR transparent container, and this field may only include a PLMN list.
(2) The SOR information includes the network identifier and access technology list, and the network identifier and access technology list is determined based on the location of the terminal device and/or the frequency band supported by the terminal device.

For example, contents of the network identifier and access technology list include: a network identifier and access technology of an operator corresponding to the location of the terminal device; and/or a network identifier and access technology of an operator corresponding to the frequency band supported by the terminal device.

In some examples, based on the location of the terminal device, the network identifier and access technology list (the PLMN ID and access technology list) field of the SOR transparent container may be configured with only a network identifier and access technology of an operator in a country or region where the terminal device is currently located, rather than the entire set of the network identifier and access technology list (the PLMN ID and access technology list).

In some examples, based on the frequency band supported by the terminal device, the network identifier and access technology list (the PLMN ID and access technology list) field of the SOR transparent container may be configured with only a network identifier and access technology of an operator corresponding to the frequency band, rather than the entire set of the network identifier and access technology list (the PLMN ID and access technology list).

In some examples, based on the location of the terminal device and the frequency band supported by the terminal device, the network identifier and access technology list (the PLMN ID and access technology list) field of the SOR transparent container may be configured with only a network identifier and an access technology corresponding to not only the operator in the country or region where the terminal device is currently located, but also the frequency band supported by the terminal device, rather than the entire set of the network identifier and access technology list (the PLMN ID and access technology list).

(3) The SOR information does not include SOR-CMCI.

Since zero-power terminals generally transmit small data such as measurement and location parameters, have little demand for continuous transmission of services, and may directly enter the idle state after receiving the SOR information, SOR-CMCI for each service may not be configured for the zero-power terminals.

For example, the SOR-CMCI indicator in the SOR transparent container may be set to 0, which indicates that there is no SOR-CMCI in the SOR information. For example, a length of the SSCMI in the SOR transparent container IE is set to 1 bit. In a case where a value of the SSCMI is 0, it indicates that there is no SOR-CMCI in the SOR information; and in a case where the value of the SSCMI is 1, it indicates that there is SOR-CMCI in the SOR information. Alternatively, in a case where the value of the SSCMI is 1, it indicates that there is no SOR-CMCI in the SOR information; and in a case where the value of the SSCMI is 0, it indicates that there is SOR-CMCI in the SOR information.

(4) The SOR information includes a first timer.

The first timer may be used to control time for the terminal device to reselect a network after receiving the SOR information. For example, after receiving the SOR information, the terminal device enters the idle state in a case where the first timer expires and performs network selection.

(5) The terminal device is not required to feed back an acknowledgment (ACK) message of the SOR information to a network side.

In S450, the second network element transmits a second message to the first network element, where the second message carries the identification information of the terminal device. The second message may further carry the SOR information, and the SOR information may be determined by the second network element or the third network element. In a case where the terminal device is the zero-power terminal, the SOR information may be the simplified SOR information described above; or in a case where the terminal device is the zero-power terminal, the second message transmitted by the second network element to the first network element may not carry the SOR information. The second message may include a response message to the third message, etc.

In S460, the first network element transmits a registration acceptance message to the terminal device.

The registration acceptance message may be forwarded to the terminal device through the access device.

The registration acceptance message may carry the SOR information. For example, in a case where the terminal device is the zero-power terminal, the registration acceptance message may carry the simplified SOR information received in step S450. Specifically, the registration request message may carry the SOR transparent container, and the SOR transparent container carries the SOR information.

Alternatively, the registration acceptance message may not carry the SOR information. For example, in a case where the terminal device is the zero-power terminal, the registration acceptance message may not carry the SOR information.

Alternatively, the first network element may transmit another message to the terminal device. For example, the first network element transmits a first message (not illustrated in the figure), in which the SOR information is carried. For example, the first message carries the SOR transparent container, and the SOR transparent container carries the SOR information. In some implementations, the first message may be forwarded to the terminal device through the access device.

Then, the terminal device may perform subsequent communication processes based on the received information.

For example, in a case where the terminal device is the zero-power terminal, the registration acceptance message or the first message received by the terminal device may carry the SOR information, and the SOR information is the simplified SOR information. The terminal device may not feed back an acknowledgment (ACK) message of the SOR information to the network side. By using the simplified SOR information, the terminal device may enter the idle state and perform network selection after the first timer expires, and during the network selection process, the terminal device may adopt the access technology specific to the zero-power terminal, or may adopt the network identifier and access technology of the operator corresponding to the location of the terminal device and/or the network identifier and access technology of the operator corresponding to the frequency band supported by the terminal device included in the network identifier and access technology list (the PLMN ID and access technology list), thereby reducing the complexity of the SOR process.

Alternatively, in a case where the terminal device is the zero-power terminal, in some implementations, the terminal device cannot receive the SOR information. That is, the registration acceptance message received by the terminal device does not carry the SOR information. In this case, the terminal device may directly skip an SOR process, which may also reduce the complexity.

FIG. 5 is a schematic flowchart of a communication method 500 according to embodiments of the present application. The method may be applied to the systems illustrated in FIG. 1 to FIG. 3, but is not limited thereto. The method includes at least part of the following.

In S510, a terminal device transmits a registration request message to a first network element, where the registration request message carries identification information of the terminal device.

In S520, the terminal device receives a registration acceptance message from the first network element.

The terminal device may include a zero-power terminal, such as an AIoT terminal; or the terminal device may include a terminal in terminals of other types other than the zero-power terminal.

In some implementations, the terminal device may transmit an RRC message including the registration request message to the first network element; the registration request message may further carry a first indication and/or a frequency band supported by the terminal device, where the first indication is used to indicate whether the terminal device is the zero-power terminal. In some examples, the registration request message may be forwarded to the first network element through an access device, and the access device may transmit other relevant information (e.g., an access technology used by the terminal device and/or a location of the terminal device) to the first network element. The first network element queries relevant information of the terminal device from a second network element based on the received registration request message and other relevant information; and the second network element transmits a second message to the first network element, where the second message carries the identification information of the terminal device and may further carry SOR information.

The first network element transmits the registration acceptance message to the terminal device, and the registration acceptance message may carry the SOR information. For example, the first network element transmits the registration acceptance message to the terminal device, and the registration acceptance message may be forwarded to the terminal device through the access device. In some examples, the registration acceptance message may carry an SOR transparent container, and the SOR transparent container carries the SOR information.

In some examples, the method further includes that the terminal device receives a first message, where the first message carries the SOR information.

For example, the first message carries the SOR transparent container, and the SOR transparent container carries the SOR information.

For example, the first network element transmits the first message to the terminal device. For example, the first message may be forwarded to the terminal device through the access device. The first message may include a downlink NAS transport message.

In a case where the terminal device is the zero-power terminal, the registration acceptance message or the first message received by the terminal device may carry the SOR information, which may be simplified SOR information, or the registration acceptance message received by the terminal device may not carry the SOR information.

For the case where the registration acceptance message carries the SOR information:

In some examples, the SOR information does not include an access technology.

In some examples, the SOR information includes a network identifier and access technology list, and the network identifier and access technology list is determined based on the location of the terminal device and/or the frequency band supported by the terminal device. For example, contents of the network identifier and access technology list include: a network identifier and access technology of an operator corresponding to the location of the terminal device; and/or a network identifier and access technology of an operator corresponding to the frequency band supported by the terminal device.

In some implementations, the SOR information does not include SOR-CMCI.

In some implementations, the SOR information includes a first timer.

Furthermore, the terminal device may not feedback an acknowledgment (ACK) message of the SOR information to a network side.

In a case where the terminal device is the zero-power terminal, and the registration acceptance message received by the terminal device does not carry the SOR information, the terminal device may directly skip an SOR process, which may also achieve the effect of reducing complexity.

FIG. 6A is a schematic flowchart of a communication method 600 according to embodiments of the present application. The method may be applied to the systems illustrated in FIG. 1 to FIG. 3, but is not limited thereto. The method includes at least part of the following.

In S610, a first network element receives a second message from a second network element, where the second message carries identification information of a terminal device.

In S620, the first network element transmits a registration acceptance message to the terminal device.

In some implementations, the first network element may include a device such as an AMF, and the second network element may include a device such as a UDM or UDR.

In some examples, the second message includes a response message of a Nudm _SubscriberDataManagement_Get message or a Nudm_UEContextManagement_Update message.

As illustrated in step S620, in some examples, the registration acceptance message may be forwarded to the terminal device through an access device.

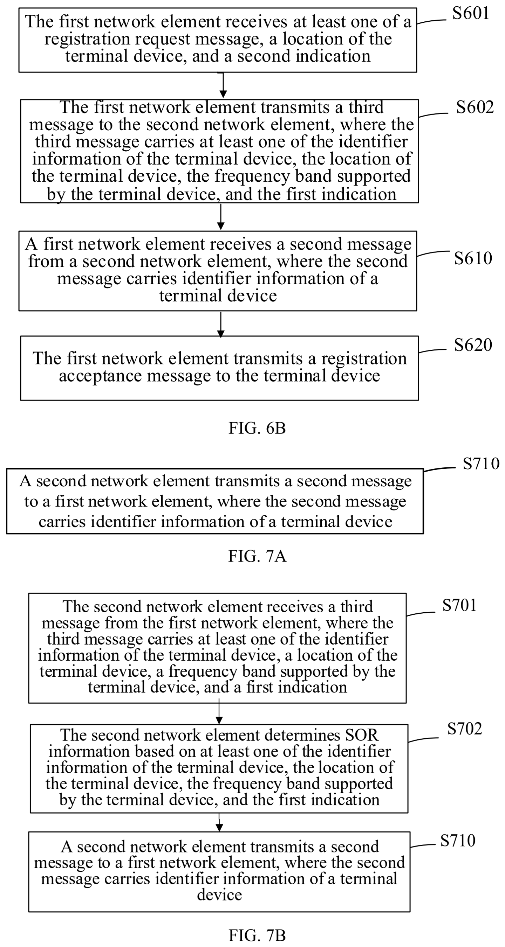

FIG. 6B is another schematic flowchart of a communication method 600 according to embodiments of the present application. As illustrated in FIG. 6B, before step S610, the method may further include the following.

In S601, the first network element receives at least one of a registration request message, a location of the terminal device, or a second indication. In some examples, the first network element may receive at least one of the registration request message, the location of the terminal device, or the second indication from the terminal device. For example, the registration request message may be forwarded to the first network element through the access device.

(1) The registration request message may carry at least one of the identification information of the terminal device, a frequency band supported by the terminal device, or a first indication, where the first indication may be used to indicate whether the terminal device is a zero-power terminal.

(2) The location of the terminal device may include a TAI where the terminal device is located.

(3) The second indication is used to indicate that the terminal device uses a first access technology. For example, the first network element may receive at least one of the registration request message, the location of the terminal device, or the second indication, where the registration request message may be forwarded to the first network element through the access device, and the location of the terminal device and the second indication may be determined by the access device and then transmitted to the first network element. The first access technology may include an access technology used by the zero-power terminal. The first network element may determine whether the terminal device is the zero-power terminal based on the second indication. For example, in a case where the first network element receives the second indication, since the second indication is used to indicate that the terminal device uses an access technology specific to zero-power terminals (i.e., the first access technology), the first network element may determine that the terminal device is the zero-power terminal.

It can be seen that the first network element may determine whether the terminal device is the zero-power terminal based on the first indication carried in the registration request message, may also obtain the access technology used by the terminal device based on the second indication transmitted by the access device, thereby determining whether the terminal device is the zero-power terminal.

In S602, the first network element transmits a third message to the second network element, where the third message carries at least one of the identification information of the terminal device, the location of the terminal device, the frequency band supported by the terminal device, or the first indication. The third message may include a user data management acquisition (Nudm_SubscriberDataManagement_Get) message or a user equipment context management update (Nudm_UEContextManagement_Update) message.

The information carried in the third message may be used for the second network element or other network elements to determine the SOR information and to feed back the SOR information to the first network element; or the information carried in the third message is used for the second network element to determine not to feedback the SOR information in a case of determining that the terminal device is the zero-power terminal.

The above two methods are described below respectively.

Method I: The second network element feeds back the SOR information to the first network element.

The first network element receives the second message from the second network element, where the second message further carries the SOR information.

Correspondingly, the registration acceptance message transmitted by the first network element may carry the SOR information. For example, the registration acceptance message carries an SOR transparent container, and the SOR transparent container carries the SOR information.

Alternatively, the first network element may further transmit a first message, and the first message carries the SOR information. For example, the first message carries the SOR transparent container, and the SOR transparent container carries the SOR information. In some examples, the first network element transmits the first message to the first network element, and the first message may be forwarded to the terminal device through the access device.

In some examples, the first message may include a downlink NAS transport message.

In some implementations, in a case where the terminal device is the zero-power terminal, the second message received by the first network element may carry the SOR information, and the SOR information may be the simplified SOR information.

In some examples, the SOR information does not include an access technology.

In some examples, the SOR information includes a network identifier and access technology list, and the network identifier and access technology list is determined based on the location of the terminal device and/or the frequency band supported by the terminal device. For example, contents of the network identifier and access technology list include: a network identifier and access technology of an operator corresponding to the location of the terminal device; and/or a network identifier and access technology of an operator corresponding to the frequency band supported by the terminal device.

In some implementations, the SOR information does not include SOR-CMCI.

In some implementations, the SOR information includes a first timer.

In this way, the SOR information may be transmitted to the terminal device via the first network element. By using the SOR information, the terminal device may enter the idle state and perform network selection after the first timer expires, and during the network selection process, the terminal device may adopt the access technology specific to the zero-power terminal, or may adopt the network identifier and access technology of the operator corresponding to the location of the terminal device and/or the network identifier and access technology of the operator corresponding to the frequency band supported by the terminal device included in the network identifier and access technology list, thereby reducing the complexity of the SOR process.

### Method II:

The second network element does not feed back the SOR information to the first network element:

The first network element receives the second message from the second network element, where the second message does not carry the SOR information.

Correspondingly, the registration acceptance message transmitted by the first network element does not carry the SOR information. In this way, the terminal device does not perform the SOR process after receiving the registration acceptance message.

In this way, the registration acceptance message fed back by the first network element to the terminal device does not carry the SOR information, and thus the terminal device may directly skip the SOR process, which may also achieve the effect of reducing complexity.

FIG. 7A is a schematic flowchart of a communication method 700 according to embodiments of the present application. The method may be applied to the systems illustrated in FIG. 1 to FIG. 3, but is not limited thereto. The method includes at least part of the following.

In S710, a second network element transmits a second message to a first network element, where the second message carries identification information of a terminal device.

In some implementations, the first network element may include a device such as an AMF, and the second network element may include a device such as a UDM or UDR.

In some examples, the second message includes a response message of a Nudm _SubscriberDataManagement_Get message or a Nudm_UEContextManagement_Update message.

FIG. 7B is another schematic flowchart of a communication method 700 according to embodiments of the present application. As illustrated in FIG. 7B, before step S710, the method may further include the following.

In S701, the second network element receives a third message from the first network element, where the third message carries at least one of the identification information of the terminal device, a location of the terminal device, a frequency band supported by the terminal device, or a first indication; and the first indication may be used to indicate whether the terminal device is a zero-power terminal. The location of the terminal device may include a TAI where the terminal device is located. In some examples, the third message may include a user data management acquisition (Nudm_SubscriberDataManagement_Get) message or a user equipment context management update (Nudm_UEContextManagement_Update) message.

In S702, the second network element determines SOR information based on at least one of the identification information of the terminal device, the location of the terminal device, the frequency band supported by the terminal device, or the first indication. Then, step S710 is performed.

Alternatively, the second network element transmits at least one of the identification information of the terminal device, the location of the terminal device, the frequency band supported by the terminal device, or the first indication to a third network element; and the second network element receives the SOR information from the third network element. The third network element may include an SOR-AF, and the SOR information is determined by the third network element based on the received information. Then, step S710 is performed.

Alternatively, in a case where the second network element obtains, based on the first indication, that the terminal device is a zero-power terminal, the second network element can determine that the second message does not carry the SOR information and directly perform step S710. That is, the second network element transmits the second message to the first network element, and the second message does not carry the SOR information. In this way, the registration acceptance message fed back by the first network element to the terminal device does not carry the SOR information, and thus the terminal device may directly skip the SOR process, which may also achieve the effect of reducing complexity.

In a case where the terminal device is the zero-power terminal, and the second network element determines or receives the SOR information in step S702, in step S710, the second message transmitted by the second network element to the first network element further carries the SOR information. Correspondingly, the registration acceptance message transmitted by the first network element to the terminal device carries the SOR information. The SOR information may be simplified SOR information.

In some examples, the SOR information does not include an access technology.

In some examples, the SOR information is determined based on the location of the terminal device and/or the frequency band supported by the terminal device. For example, the SOR information includes a network identifier and access technology list, and the network identifier and access technology list is determined based on the location of the terminal device and/or the frequency band supported by the terminal device. For example, contents of the network identifier and access technology list include: a network identifier and access technology of an operator corresponding to the location of the terminal device; and/or a network identifier and access technology of an operator corresponding to the frequency band supported by the terminal device.

In some implementations, the SOR information does not include SOR-CMCI.

In some implementations, the SOR information includes a first timer.

By using the SOR information, the terminal device may enter the idle state and perform network selection after the first timer expires, and during the network selection process, the terminal device may adopt an access technology specific to the zero-power terminal, or may adopt the network identifier and access technology of the operator corresponding to the location of the terminal device and/or the network identifier and access technology of the operator corresponding to the frequency band supported by the terminal device included in the network identifier and access technology list, thereby reducing the complexity of the SOR process.

It should be noted that, in a case where the method that does not require determining the SOR information is adopted, the third message may not carry the location of the terminal device and the frequency band supported by the terminal device (because this information is used to determine the SOR information), but only carry the identification information of the terminal device and the first indication, and the subsequent series of relevant information may also not carry the location of the terminal device and the frequency band supported by the terminal device.

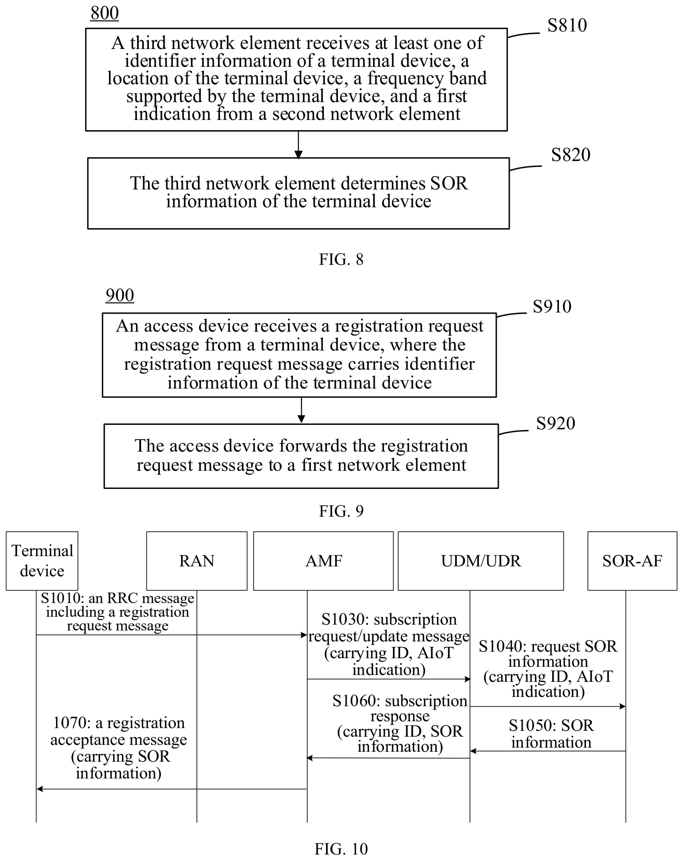

FIG. 8 is a schematic flowchart of a communication method 800 according to embodiments of the present application. The method may be applied to the systems illustrated in FIG. 1 to FIG. 3, but is not limited thereto. The method includes at least part of the following.

In S810, a third network element receives at least one of identification information of a terminal device, a location of the terminal device, a frequency band supported by the terminal device, or a first indication from a second network element, where the first indication may be used to indicate whether the terminal device is a zero-power terminal.

In S820, the third network element determines SOR information of the terminal device.

The third network element may include a network element such as an SOR-AF. The second network element may include a network element such as a UDM or a UDR.

In some implementations, the method may further include: transmitting, by the third network element, the SOR information of the terminal device to the second network element.

In a case where the terminal device is a zero-power terminal, the SOR information determined and transmitted by the third network element may be simplified SOR information.

In some examples, the SOR information does not include an access technology.

In some examples, the SOR information is determined based on the location of the terminal device and/or the frequency band supported by the terminal device. For example, the SOR information includes a network identifier and access technology list, and the network identifier and access technology list is determined based on the location of the terminal device and/or the frequency band supported by the terminal device. For example, contents of the network identifier and access technology list include: a network identifier and access technology of an operator corresponding to the location of the terminal device; and/or a network identifier and access technology of an operator corresponding to the frequency band supported by the terminal device.

In some implementations, the SOR information does not include SOR-CMCI.

In some implementations, the SOR information includes a first timer.

The SOR information determined by the third network element is transmitted to the terminal device via the second network element and the first network element. In this way, the terminal device may enter the idle state and perform network selection after the first timer expires, and during the network selection process, the terminal device may adopt an access technology specific to the zero-power terminal, or may adopt the network identifier and access technology of the operator corresponding to the location of the terminal device and/or the network identifier and access technology of the operator corresponding to the frequency band supported by the terminal device included in the network identifier and access technology list, thereby reducing the complexity of the SOR process.

FIG. 9 is a schematic flowchart of a communication method 900 according to embodiments of the present application. The method may be applied to the systems illustrated in FIG. 1 to FIG. 3, but is not limited thereto. The method includes at least part of the following.

In S910, an access device receives a registration request message from a terminal device, where the registration request message carries identification information of the terminal device.

In S920, the access device forwards the registration request message to a first network element.

The access device may include a base station. The first network element may include a network element such as an AMF.

For example, the access device receives an RRC message including the registration request message from the terminal device.

In some implementations, the registration request message carries a first indication and/or a frequency band supported by the terminal device, where the first indication is used to indicate whether the terminal device is a zero-power terminal.

In some implementations, the method further includes that the access device transmits an access technology used by the terminal device and/or a location of the terminal device to the first network element.

The information transmitted by the access device to the first network element includes relevant information for determining whether to generate SOR information of the terminal device and specific contents of the SOR information, so that the terminal device may perform a simplified SOR process based on the SOR information, or directly skip the SOR process, thereby reducing the complexity of the terminal device.

The present application is described in detail below with reference to the accompanying drawings through specific embodiments.

### Embodiment I

This embodiment is described by taking an example where an access device includes a base station, a first network element includes an AMF, a second network element includes a UDM/UDR, and a third network element includes an SOR-AF, but this example is not intended to limit the present application.

FIG. 10 is an implementation flowchart of Embodiment I of the present application, and the implementation process includes the following.

In S1010, a terminal device transmits an RRC message including a registration request message to the AMF, where the registration request message carries identification information of the terminal device. The registration request message may further carry a frequency band supported by the terminal device, and/or indication information for indicating whether the terminal device is a zero-power terminal.

For example, the terminal device may carry an AIoT capability in the registration request message, and the AIoT capability may be used as the indication information for indicating whether the terminal device is the zero-power terminal.

In some examples, in a case where a value of the AIoT capability is 1, it means that the terminal device has the AIoT capability and the terminal device is the zero-power terminal; and in a case where the value of the AIoT capability is 0, it means that the terminal device does not have the AIoT capability and the terminal device is not the zero-power terminal. In some other examples, in a case where the value of the AIoT capability is 1, it means that the terminal device does not have the AIoT capability and the terminal device is not the zero-power terminal; and in a case where the value of the AIoT capability is 0, it means that the terminal device has the AIoT capability and the terminal device is the zero-power terminal.

In some examples, the registration request message may be forwarded to the AMF through the base station in a radio access network (RAN). For example, after the base station receives the RRC message including the registration request message, in a case where the registration request message carries the indication information for indicating whether the terminal device is the zero-power terminal, the base station forwards the registration request message to the AMF and transmits a location of the terminal device at the same time. The location of the terminal device may be a TAI where the terminal device is located.

In a case where the registration request message does not carry the indication information for indicating whether the terminal device is the zero-power terminal, the base station may forward the registration request message to the AMF and transmit the location of the terminal device and an access technology used by the terminal device at the same time. For example, the base station indicates to the AMF that the access technology used by the terminal device is a technology specific to zero-power devices, and the AMF may determine that the terminal device is the zero-power terminal based on the indication.

In S1030, the AMF requests subscription information of the terminal device from the UDM/UDR. The AMF transmits a Nudm _SubscriberDataManagement_Get message or a Nudm_UEContextManagement_Update message to the UDM/UDR, and the Nudm _SubscriberDataManagement_Get message or Nudm_UEContextManagement_Update message carries the identification information of the terminal device, the location of the terminal device, the frequency band supported by the terminal device, and an AIoT indication. The AIoT indication is used to indicate whether the terminal device is the zero-power terminal. In some examples, in a case where a value of the AIoT indication is 1, it means that the terminal device is the zero-power terminal; and in a case where the value of the AIoT indication is 0, it means that the terminal device is not the zero-power terminal. In some other examples, in a case where the value of the AIoT indication is 1, it means that the terminal device is not the zero-power terminal; and in a case where the value of the AIoT indication is 0, it means that the terminal device is the zero-power terminal. The AIoT indication is an optional parameter. For example, in a case where the UDM/UDR can find out, from the subscription information of the terminal device, whether the terminal device is the zero-power terminal through the identification information of the terminal device, the AIoT indication is not required to be carried. For example, during a network access permission for the terminal device, an operator may record information such as whether the terminal device is the zero-power terminal and the frequency band supported by the terminal device in the UDM/UDR.

In S1040, in a case where the UDM/UDR cannot obtain the SOR information of the terminal device locally, the UDM/UDR may request the SOR information of the terminal device from the SOR-AF. For example, the UDM/UDR transmits at least one of the identification information of the terminal device, the location of the terminal device, the frequency band supported by the terminal device, or the AIoT indication to the SOR-AF.

In S1050, the SOR-AF determines whether the terminal device is the zero-power terminal based on the AIoT indication; in a case where the terminal device is the zero-power terminal, the SOR-AF determines simplified SOR information for the terminal device and returns a response message to the UDM/UDR, where the response message may carry the identification information of the terminal device and the SOR information.

The method for simplifying the SOR information includes one or more of the following:
(1) in a case where the zero-power terminal uses a specific access technology, it is not necessary to include the access technology in the PLMN ID and access technology list, and only the PLMN list is transmitted;
(2) based on the location of the terminal device, only the PLMN ID and access technology list of an operator in a country or region where the terminal device is currently located is configured, rather than the entire set;
(3) based on the frequency band supported by the terminal device, only the PLMN ID and access technology list of an operator corresponding to the frequency band is configured, rather than the entire set;
(4) SOR-CMCI is not configured; due to the fact that AIoT devices generally transmit small data such as measurement and location parameters, have little demand for continuous transmission of services, and may directly enter the idle state after receiving the SOR information, the SOR-CMCI may not be configured, where the SOR-CMCI indicator is set to 0, which means that there is no SOR-CMCI;
(5) in a case where the HPLMN wants to control the time for the UE to reselect a network, a timer may be configured; and
(6) the network does not require the UE to reply with an ACK message.

In S1060, the UDM/UDR replies to the AMF with a response message of Nudm _SubscriberDataManagement_Get message or Nudm_UEContextManagement_Update message, and the response message includes the identification information of the terminal device (UE ID) and the SOR information.

In S1070, the AMF transmits a registration acceptance message to the terminal device. For example, the registration acceptance message may be forwarded to the terminal device through the base station. The registration acceptance message includes an SOR transparent container, and the SOR transparent container includes the SOR information. Alternatively, the AMF may transmit the SOR information after a registration process. For example, after the registration process, the AMF transmits a first message to the terminal device, where the first message includes the SOR transparent container, and the SOR transparent container includes the SOR information. The first message may include a downlink NAS transport message.

### Embodiment II

This embodiment is described by taking an example where an access device includes a base station, a first network element includes an AMF, and a second network element includes a UDM/UDR, but this example is not intended to limit the present application.

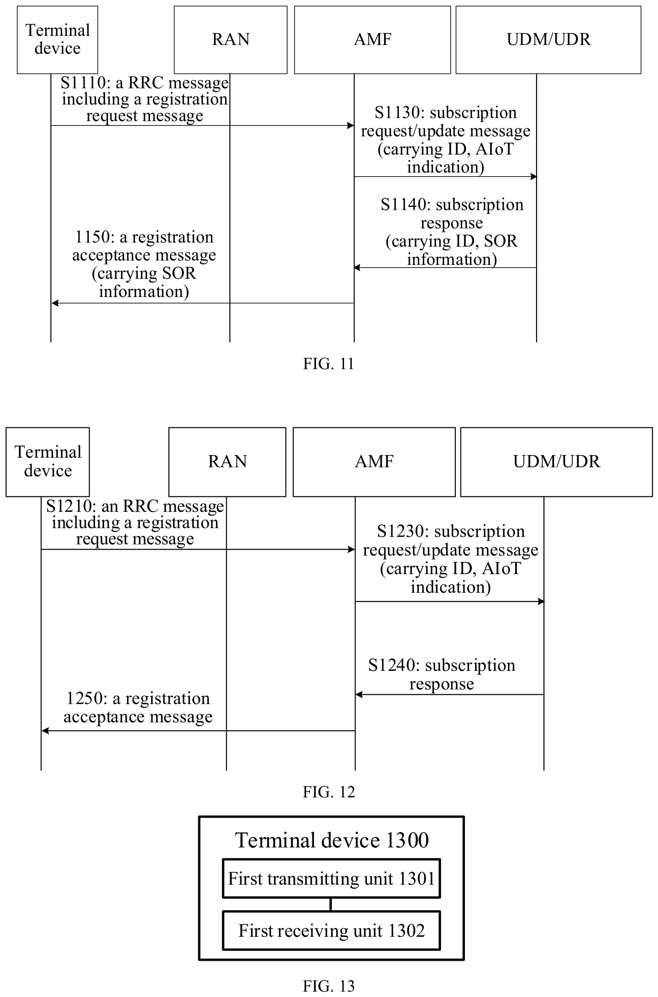

FIG. 11 is an implementation flowchart of Embodiment II of the present application, and the implementation process includes the following.

In S1110, a terminal device transmits an RRC message including a registration request message to the AMF, where the registration request message carries identification information of the terminal device. The registration request message may further carry a frequency band supported by the terminal device, and/or indication information for indicating whether the terminal device is a zero-power terminal.

For example, the terminal device may carry an AIoT capability in the registration request message, and the AIoT capability may be used as the indication information for indicating whether the terminal device is the zero-power terminal.

In some examples, in a case where a value of the AIoT capability is 1, it means that the terminal device has the AIoT capability and the terminal device is the zero-power terminal; and in a case where the value of the AIoT capability is 0, it means that the terminal device does not have the AIoT capability and the terminal device is not the zero-power terminal. In some other examples, in a case where the value of the AIoT capability is 1, it means that the terminal device does not have the AIoT capability and the terminal device is not the zero-power terminal; and in a case where the value of the AIoT capability is 0, it means that the terminal device has the AIoT capability and the terminal device is the zero-power terminal.

In some examples, the registration request message may be forwarded to the AMF through the base station in the RAN. For example, after the base station receives the RRC message including the registration request message, in a case where the registration request message carries the indication information for indicating whether the terminal device is the zero-power terminal, the base station forwards the registration request message to the AMF and transmits a location of the terminal device at the same time. The location of the terminal device may be a TAI where the terminal device is located.

In a case where the registration request message does not carry the indication information for indicating whether the terminal device is the zero-power terminal, the base station may forward the registration request message to the AMF and transmit the location of the terminal device and an access technology used by the terminal device at the same time. For example, the base station indicates to the AMF that the access technology used by the terminal device is a technology specific to zero-power devices, and the AMF may determine that the terminal device is the zero-power terminal based on the indication.

In S1130, the AMF requests subscription information of the terminal device from the UDM/UDR. The AMF transmits a Nudm _SubscriberDataManagement_Get message or a Nudm _UEContextManagement_Update message to the UDM/UDR, and the Nudm _SubscriberDataManagement_Get message or Nudm _UEContextManagement_Update message carries the identification information of the terminal device, the location of the terminal device, the frequency band supported by the terminal device, and an AIoT indication. The AIoT indication is used to indicate whether the terminal device is the zero-power terminal. In some examples, in a case where a value of the AIoT indication is 1, it means that the terminal device is the zero-power terminal; and in a case where the value of the AIoT indication is 0, it means that the terminal device is not the zero-power terminal. In some other examples, in a case where the value of the AIoT indication is 1, it means that the terminal device is not the zero-power terminal; and in a case where the value of the AIoT indication is 0, it means that the terminal device is the zero-power terminal. The AIoT indication is an optional parameter. For example, in a case where the UDM/UDR can find out, from the subscription information of the terminal device, whether the terminal device is the zero-power terminal through the identification information of the terminal device, the AIoT indication is not required to be carried. For example, during a network access permission for the terminal device, an operator may record information such as whether the terminal device is the zero-power terminal and the frequency band supported by the terminal device in the UDM/UDR.

In S1140, in a case where the UDM/UDR is able to obtain the SOR information of the terminal device locally, the UDM/UDR determines whether the terminal device is the zero-power terminal based on the AIoT indication; and in a case where the terminal device is the zero-power terminal, the UDM/UDR determines simplified SOR information for the terminal device. The method for simplifying the SOR information includes one or more of the following:
(1) in a case where the zero-power terminal uses a specific access technology, it is not necessary to include the access technology in the PLMN ID and access technology list, and only the PLMN list is transmitted;
(2) based on the location of the terminal device, only the PLMN ID and access technology list of an operator in a country or region where the terminal device is currently located is configured, rather than the entire set;
(3) based on the frequency band supported by the terminal device, only the PLMN ID and access technology list of an operator corresponding to the frequency band is configured, rather than the entire set;
(4) SOR-CMCI is not configured; due to the fact that AIoT devices generally transmit small data such as measurement and location parameters, have little demand for continuous transmission of services, and may directly enter the idle state after receiving the SOR information, the SOR-CMCI may not be configured, where the SOR-CMCI indicator is set to 0, which means that there is no SOR-CMCI;
(5) in a case where the HPLMN wants to control the time for the UE to reselect a network, a timer may be configured; and
(6) the network does not require the UE to reply with an ACK message.

The UDM/UDR replies to the AMF with a response message of Nudm _SubscriberDataManagement_Get message or Nudm _UEContextManagement_Update message, and the response message includes the identification information of the terminal device (UE ID) and the SOR information.

In S1150, the AMF transmits a registration acceptance message to the terminal device. For example, the registration acceptance message may be forwarded to the terminal device through the base station. The registration acceptance message includes an SOR transparent container, and the SOR transparent container includes the SOR information. Alternatively, the AMF may transmit the SOR information after a registration process. For example, after the registration process, the AMF transmits a first message to the terminal device, where the first message includes the SOR transparent container, and the SOR transparent container includes the SOR information. The first message may include a downlink NAS transport message.

### Embodiment III

This embodiment is described by taking an example where an access device includes a base station, a first network element includes an AMF, and a second network element includes a UDM/UDR, but this example is not intended to limit the present application.

FIG. 12 is an implementation flowchart of Embodiment III of the present application, and the implementation process includes the following.

In S1210, a terminal device transmits an RRC message including a registration request message to the terminal device, where the registration request message carries identification information of the terminal device. The registration request message may further carry a frequency band supported by the terminal device, and/or indication information for indicating whether the terminal device is a zero-power terminal.

For example, the terminal device may carry an AIoT capability in the registration request message, and the AIoT capability may be used as the indication information for indicating whether the terminal device is the zero-power terminal.

In some examples, in a case where a value of the AIoT capability is 1, it means that the terminal device has the AIoT capability and the terminal device is the zero-power terminal; and in a case where the value of the AIoT capability is 0, it means that the terminal device does not have the AIoT capability and the terminal device is not the zero-power terminal. In some other examples, in a case where the value of the AIoT capability is 1, it means that the terminal device does not have the AIoT capability and the terminal device is not the zero-power terminal; and in a case where the value of the AIoT capability is 0, it means that the terminal device has the AIoT capability and the terminal device is the zero-power terminal.

In some examples, the registration request message may be forwarded to the AMF through the base station in the RAN. For example, after the base station receives the RRC message including the registration request message, in a case where the registration request message carries the indication information for indicating whether the terminal device is the zero-power terminal, the base station forwards the registration request message to the AMF.

In a case where the registration request message does not carry the indication information for indicating whether the terminal device is the zero-power terminal, the base station may forward the registration request message to the AMF and transmit an access technology used by the terminal device at the same time. For example, the base station indicates to the AMF that the access technology used by the terminal device is a technology specific to zero-power devices, and the AMF may determine that the terminal device is the zero-power terminal based on the indication.

In S 1230, the AMF requests subscription information of the terminal device from the UDM/UDR. The AMF transmits a Nudm _SubscriberDataManagement_Get message or a Nudm _UEContextManagement_Update message to the UDM/UDR, and the Nudm _SubscriberDataManagement_Get message or Nudm _UEContextManagement_Update message carries the identification information of the terminal device and an AIoT indication. The AIoT indication is used to indicate whether the terminal device is the zero-power terminal. In some examples, in a case where a value of the AIoT indication is 1, it means that the terminal device is the zero-power terminal; and in a case where the value of the AIoT indication is 0, it means that the terminal device is not the zero-power terminal. In some other examples, in a case where the value of the AIoT indication is 1, it means that the terminal device is not the zero-power terminal; and in a case where the value of the AIoT indication is 0, it means that the terminal device is the zero-power terminal. The AIoT indication is an optional parameter. For example, in a case where the UDM/UDR can find out, from the subscription information of the terminal device, whether the terminal device is the zero-power terminal through the identification information of the terminal device, the AIoT indication is not required to be carried. For example, during a network access permission for the terminal device, an operator may record information such as whether the terminal device is the zero-power terminal and the frequency band supported by the terminal device in the UDM/UDR.

In S1240, the UDM/UDR determines that the terminal device is the zero-power terminal based on the AIoT indication, and the UDM/UDR determines not to transmit the SOR information to the terminal side (device), which prevents the terminal device from performing the SOR process. The UDM/UDR transmits a response message of the Nudm _SubscriberDataManagement_Get message or Nudm _UEContextManagement_Update message to the AMF, and the response message does not carry the SOR information.

In S1250, the AMF transmits a registration acceptance message to the terminal device. For example, the registration acceptance message may be forwarded to the terminal device through the base station, where the registration acceptance message does not carry the SOR information.

The embodiments of the present application further provide a terminal device. FIG. 13 is a schematic structural diagram of a terminal device 1300 according to the embodiments of the present application, and the terminal device 1300 includes:
a first transmitting unit 1301, configured to transmit a registration request message to a first network element, where the registration request message carries identification information of the terminal device; and
a first receiving unit 1302, configured to receive a registration acceptance message from the first network element.

In some implementations, the registration acceptance message carries SOR information.

The registration acceptance message may carry an SOR transparent container, and the SOR transparent container carries the SOR information.

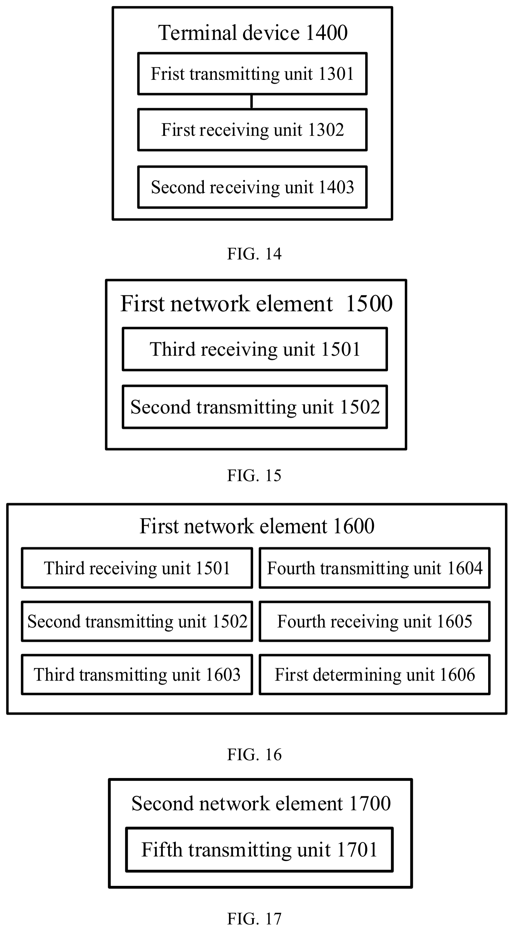

FIG. 14 is a schematic structural diagram of a terminal device 1400 according to the embodiments of the present application. As illustrated in FIG. 14, the terminal device further includes:
a second receiving unit 1403, configured to receive a first message, where the first message carries the SOR information.

The first message may carry an SOR transparent container, and the SOR transparent container carries the SOR information.

In some implementations, the first message includes a downlink NAS transport message.

In some implementations, the registration request message further carries a first indication and/or a frequency band supported by the terminal device, where the first indication is used to indicate whether the terminal device is a zero-power terminal.

In some implementations, in a case where the terminal device is a zero-power terminal, the registration acceptance message carries the SOR information.

In some implementations, the SOR information does not include an access technology.

In some implementations, the SOR information includes a network identifier and access technology list, where the network identifier and access technology list is determined based on a location of the terminal device and/or the frequency band supported by the terminal device.

In some implementations, contents of the network identifier and access technology list include: a network identifier and access technology of an operator corresponding to the location of the terminal device; and/or a network identifier and access technology of an operator corresponding to the frequency band supported by the terminal device.

In some implementations, the SOR information does not include SOR-CMCI.

In some implementations, the SOR information includes a first timer.

In some implementations, in a case where the terminal device is the zero-power terminal, the registration acceptance message does not carry the SOR information.

In some implementations, the terminal device includes the zero-power terminal.

It should be understood that the above and other operations and/or functions of the units in the terminal device according to the embodiments of the present application are respectively for implementing the corresponding processes of the terminal device in the methods in FIG. 4 and FIG. 5, which will not be repeated here for the sake of brevity.

The embodiments of the present application further provide a first network element. FIG. 15 is a schematic structural diagram of a first network element 1500 according to the embodiments of the present application, and the first network element 1500 includes:
a third receiving unit 1501, configured to receive a second message from a second network element, where the second message carries identification information of a terminal device; and
a second transmitting unit 1502, configured to transmit a registration acceptance message.

In some implementations, the second message further carries SOR information.

In some implementations, the registration acceptance message carries the SOR information.

The registration acceptance message may carry an SOR transparent container, and the SOR transparent container carries the SOR information.

FIG. 16 is a schematic structural diagram of a first network element 1600 according to the embodiments of the present application. As illustrated in FIG. 16, the first network element may further include:
a third transmitting unit 1603, configured to transmit a first message, where the first message carries the SOR information.

The first message may carry an SOR transparent container, and the SOR transparent container carries the SOR information.

In some implementations, the first message includes a downlink NAS transport message.

As illustrated in FIG. 16, the first network element may further include:
a fourth transmitting unit 1604, configured to transmit a third message to the second network element, the third message carrying at least one of the identification information of the terminal device, a location of the terminal device, a frequency band supported by the terminal device, or a first indication, where
the first indication is used to indicate whether the terminal device is a zero-power terminal.

As illustrated in FIG. 16, the first network element may further include:
a fourth receiving unit 1605, configured to receive at least one of a registration request message, the location of the terminal device, or a second indication, where
the second indication is used to indicate that the terminal device uses a first access technology.

In some implementations, the first access technology includes an access technology used by the zero-power terminal.

As illustrated in FIG. 16, the first network element may further include:
a first determining unit 1606, configured to determine, based on the second indication, whether the terminal device is the zero-power terminal.

In some implementations, the registration request message carries at least one of the identification information of the terminal device, the frequency band supported by the terminal device, or the first indication.

In some implementations, the third message includes a user data management acquisition message or a user equipment context management update message.

In some implementations, in a case where the terminal device is the zero-power terminal, the second message carries the SOR information, and the SOR information is determined based on the location of the terminal device and/or the frequency band supported by the terminal device.

In some implementations, the SOR information does not include an access technology.

In some implementations, the SOR information includes a network identifier and access technology list, and the network identifier and access technology list is determined based on to the location of the terminal device and/or the frequency band supported by the terminal device.

In some implementations, contents of the network identifier and access technology list include: a network identifier and access technology of an operator corresponding to the location of the terminal device; and/or a network identifier and access technology of an operator corresponding to the frequency band supported by the terminal device.

In some implementations, the SOR information does not include SOR-CMCI.

In some implementations, the SOR information includes a first timer.

In some implementations, in a case where the terminal device is the zero-power terminal, the second message does not carry the SOR information.

In some implementations, the first network element includes an AMF.

In some implementations, the second network element includes a UDM or a UDR.

In some implementations, the second message includes a response message.

It should be understood that the above and other operations and/or functions of the units in the first network element according to the embodiments of the present application are respectively for implementing the corresponding processes of the first network element in the methods in FIG. 4, 6A and FIG. 6B, which will not be repeated here for the sake of brevity.

The embodiments of the present application further provide a second network element. FIG. 17 is a schematic structural diagram of a second network element 1700 according to the embodiments of the present application, and the second network element 1700 includes:
a fifth transmitting unit 1701, configured to transmit a second message to a first network element, where the second message carries identification information of a terminal device.

In some implementations, the second message further carries SOR information.

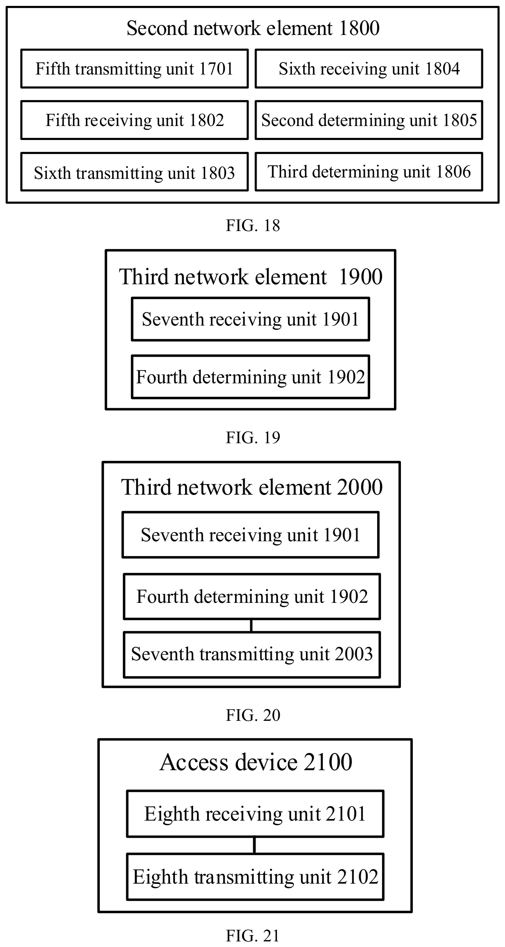

FIG. 18 is a schematic structural diagram of a second network element 1800 according to the embodiments of the present application. As illustrated in FIG. 18, the second network element may further include:
a fifth receiving unit 1802, configured to receive a third message from the first network element, where the third message carries at least one of the identification information of the terminal device, a location of the terminal device, a frequency band supported by the terminal device, or a first indication, where
the first indication is used to indicate whether the terminal device is a zero-power terminal.

As illustrated in FIG. 18, the second network element may further include:
a sixth transmitting unit 1803, configured to transmit at least one of the identification information of the terminal device, the location of the terminal device, the frequency band supported by the terminal device, or the first indication to a third network element; and
a sixth receiving unit 1804, configured to receive the SOR information from the third network element.

As illustrated in FIG. 18, the second network element may further include:
a second determining unit 1805, configured to determine the SOR information based on at least one of the identification information of the terminal device, the location of the terminal device, the frequency band supported by the terminal device, or the first indication.

In some implementations, the third message includes a user data management acquisition message or a user equipment context management update message.

In some implementations, in a case where the terminal device is the zero-power terminal, the SOR information does not include an access technology.

In some implementations, in a case where the terminal device is the zero-power terminal, the SOR information is determined based on the location of the terminal device and/or the frequency band supported by the terminal device.

In some implementations, the SOR information includes a network identifier and access technology list, and the network identifier and access technology list is determined based on the location of the terminal device and/or the frequency band supported by the terminal device.

In some implementations, contents of the network identifier and access technology list include: a network identifier and access technology of an operator corresponding to the location of the terminal device; and/or a network identifier and access technology of an operator corresponding to the frequency band supported by the terminal device.

In some implementations, the SOR information does not include SOR-CMCI.

In some implementations, the SOR information includes a first timer.

As illustrated in FIG. 18, the second network element may further include:
a third determining unit 1806, configured to determine, by the second network element, that the second message does not carry the SOR information in a case where the terminal device is the zero-power terminal.

In some implementations, the second network element includes a UDM or a UDR.

In some implementation, the first network element includes an AMF.

In some implementation, the third network element includes an SOR-AF.

In some implementations, the second message includes a response message.

It should be understood that the above and other operations and/or functions of the units in the second network element according to the embodiments of the present application are respectively for implementing the corresponding processes of the second network element in the methods in FIG. 4, 7A, and FIG. 7B, which will not be repeated here for the sake of brevity.

The embodiments of the present application further provide a third network element. FIG. 19 is a schematic structural diagram of a third network element 1900 according to the embodiments of the present application, and the third network element 1900 includes:
a seventh receiving unit 1901, configured to receive at least one of identification information of a terminal device, a location of the terminal device, a frequency band supported by the terminal device, or a first indication from a second network element, where the first indication is used to indicate whether the terminal device is a zero-power terminal; and
a fourth determining unit 1902, configured to determine SOR information of the terminal device.

FIG. 20 is a schematic structural diagram of a third network element 2000 according to the embodiments of the present application. As illustrated in FIG. 20, the third network element may further include:
a seventh transmitting unit 2003, configured to transmit the SOR information of the terminal device to the second network element.

In some implementations, in a case where the terminal device is the zero-power terminal, the SOR information does not include an access technology.

In some implementations, in a case where the terminal device is the zero-power terminal, the third network element determines the SOR information based on the location of the terminal device and/or the frequency band supported by the terminal device.

In some implementations, the SOR information includes a network identifier and access technology list; and the third network element determines the network identifier and access technology list based on the location of the terminal device and/or the frequency band supported by the terminal device.

In some implementations, contents of the network identifier and access technology list include: a network identifier and access technology of an operator corresponding to the location of the terminal device; and/or a network identifier and access technology of an operator corresponding to the frequency band supported by the terminal device.

In some implementations, the SOR information does not include SOR-CMCI.

In some implementations, the SOR information includes a first timer.

In some implementations, the third network element includes an SOR-AF.

In some implementations, the second network element includes a UDM or a UDR.

It should be understood that the above and other operations and/or functions of the units in the third network element according to the embodiments of the present application are respectively for implementing the corresponding processes of the third network element in the methods in FIG. 4 and FIG. 8, which will not be repeated here for the sake of brevity.

The embodiments of the present application further provide an access device. FIG. 21 is a schematic structural diagram of an access device 2100 according to the embodiments of the present application, and the access device 2100 includes:
an eighth receiving unit 2101, configured to receive a registration request message from a terminal device, where the registration request message carries identification information of the terminal device; and
an eighth transmitting unit 2102, configured to forward the registration request message to a first network element.

In some implementations, the registration request message carries a first indication and/or a frequency band supported by the terminal device, where the first indication is used to indicate whether the terminal device is a zero-power terminal.

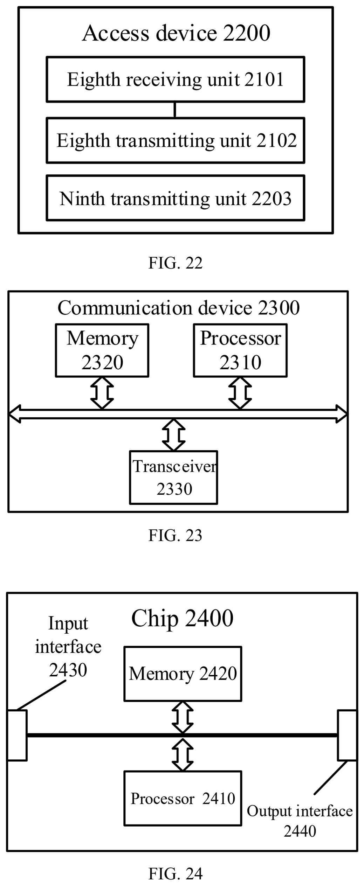

FIG. 22 is a schematic structural diagram of an access device 2200 according to the embodiments of the present application. As illustrated in FIG. 22, the access device may further include:
a ninth transmitting unit 2203, configured to transmit an access technology used by the terminal device and/or a location of the terminal device to the first network element.

In some implementations, the first network element includes an AMF.

It should be understood that the above and other operations and/or functions of the units in the access device according to the embodiments of the present application are respectively for implementing the corresponding processes of the access device in the methods in FIG. 4 and FIG. 9, which will not be repeated here for the sake of brevity.

It should be noted that the functions described in the various modules (sub-modules, units or components) in the communication device in the embodiments of the present application may be implemented by different modules (sub-modules, units or components) or by the same module (sub-module, unit or component). For example, the first receiving module and the second receiving module may be different modules or the same module, and both can implement the corresponding functions in the embodiments of the present application. In addition, the transmitting module and the receiving module in the embodiments of the present application may be implemented by a transceiver of the device, and part or all of the remaining modules may be implemented by a processor of the device.

FIG. 23 is a schematic structural diagram of a communication device 2300 according to embodiments of the present application. The communication device 2300 illustrated in FIG. 23 includes a processor 2310, and the processor 2310 may call a computer program from a memory and run the computer program, to implement the method in the embodiments of the present application.

In some implementations, as illustrated in FIG. 23, the communication device 2300 may further include a memory 2320. The processor 2310 may call the computer program from the memory 2320 and run the computer program, to implement the communication device in the embodiments of the present application.

The memory 2320 may be a separate device independent of the processor 2310 or may be integrated into the processor 2310.

In some implementations, as illustrated in FIG. 23, the communication device 2300 may further include a transceiver 2330, and the processor 2310 may control the transceiver 2330 to communicate with other devices. Specifically, the transceiver 2330 may transmit information or data to other devices, or receive information or data transmitted by other devices.

The transceiver 2330 may include a transmitter and a receiver. The transceiver 2330 may further include an antenna, and the number of antennas may be one or more.

In some implementations, the communication device 2300 may be the communication device in the embodiments of the present application, and the communication device 2300 may implement the corresponding processes implemented by the communication device in various methods in the embodiments of the present application, which will not be repeated here for the sake of brevity.

FIG. 24 is a schematic structural diagram of a chip 2400 according to embodiments of the present application. The chip 2400 illustrated in FIG. 24 includes a processor 2410, and the processor 2410 may call a computer program from a memory and run the computer program, to implement the method in the embodiments of the present application.

In some implementations, as illustrated in FIG. 24, the chip 2400 may further include a memory 2420. The processor 2410 may call the computer program from the memory 2420 and run the computer program, to implement the method in the embodiments of the present application.

The memory 2420 may be a separate device independent of the processor 2410, or may be integrated into the processor 2410.

In some implementations, the chip 2400 may further include an input interface 2430. The processor 2410 may control the input interface 2430 to communicate with other devices or chips, and specifically, to obtain information or data transmitted by other devices or chips.

In some implementations, the chip 2400 may further include an output interface 2440. The processor 2410 may control the output interface 2440 to communicate with other devices or chips, and specifically, to output information or data to other devices or chips.

In some implementations, the chip may be applied to the communication device in the embodiments of the present application, and may implement the corresponding processes implemented by the network device in various methods in the embodiments of the present application, which will not be repeated here for the sake of brevity.

It should be understood that the chip mentioned in the embodiments of the present application may also be referred to as a system-level chip, a system chip, a chip system, or a system-on-chip chip.

The processor mentioned above may be a general-purpose processor, a digital signal processor (DSP), a field programmable gate array (FPGA), an application specific integrated circuit (ASIC) or another programmable logic device, a transistor logic device, or a discrete hardware component. The general-purpose processor mentioned above may be a microprocessor or any conventional processor.

The memory mentioned above may be a volatile memory or a non-volatile memory, or may include both the volatile memory or the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memories are exemplary but are not limited illustration. For example, the memory in embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), or a direct rambus RAM (DR RAM). That is, the memories in the embodiments of the present application are intended to include, but are not limited to, these and any other suitable types of memories.

In the above embodiments, all or part of them may be implemented by software, hardware, firmware or any combination thereof. When implemented using software, all or part of the above embodiments may be implemented in the form of a computer program product. The computer program product includes one or more computer instructions. When the computer program instruction(s) are loaded and executed on a computer, the processes or functions described in the embodiments of the present application are generated in whole or in part. The computer may be a general-purpose computer, a special purpose computer, a computer network, or any other programmable device. The computer instruction(s) may be stored in a computer-readable storage medium, or transmitted from a computer-readable storage medium to another computer-readable storage medium. For example, the computer instruction(s) may be transmitted from a website, computer, server, or data center to another website, computer, server, or data center via a wired manner (e.g., coaxial cable, optical fiber, or digital subscriber line (DSL)) or a wireless manner (e.g., infrared, wireless, or microwave). The computer-readable storage medium may be any available medium that can be read by a computer or a data storage device such as a server or a data center that includes one or more available medium. The available medium may be a magnetic medium (e.g., a floppy disk, a hard disk, or a magnetic tape), an optical medium (e.g., a digital video disc (DVD)), or a semiconductor medium (e.g., a solid state disk (SSD)).

It should be understood that, in the various embodiments of the present application, the magnitudes of the serial numbers of the above processes do not mean the order of execution. The order of execution of the processes should be determined by their functions and internal logic, and should not constitute any limitation on the implementation process of the embodiments of the present application.

It may be clearly understood by those skilled in the art that, for convenience and brevity of the description, the specific working processes of the system, devices and units described above may refer to the corresponding processes in the above method embodiments, which will not be repeated here.

The above descriptions are only specific implementations of the present application, but the protection scope of the present application is not limited thereto. Changes or replacements that any person skilled in the art could readily conceive of within the technical scope of the present application shall be included in the protection scope of the present application. Therefore, the protection scope of the present application shall be subject to the protection scope of the claims.

## Claims

1. A communication method, comprising:
transmitting, by a terminal device, a registration request message to a first network element, wherein the registration request message carries identification information of the terminal device; and
receiving, by the terminal device, a registration acceptance message from the first network element.

2. The method according to claim 1, wherein the registration acceptance message carries steering of roaming (SOR) information.

3. The method according to claim 2, wherein the registration acceptance message carrying the SOR information comprises:
that the registration acceptance message carries an SOR transparent container, and the SOR transparent container carries the SOR information.

4. The method according to claim 1, further comprising:
receiving, by the terminal device, a first message from the first network element, wherein the first message carries SOR information.

5. The method according to claim 4, wherein the first message carrying the SOR information comprises:
that the first message carries an SOR transparent container, and the SOR transparent container carries the SOR information.

6. The method according to claim 4 or 5, wherein the first message comprises a downlink non-access stratum (NAS) transport message.

7. The method according to any one of claims 1 to 6, wherein the registration request message further carries a first indication and/or a frequency band supported by the terminal device, wherein the first indication is used to indicate whether the terminal device is a zero-power terminal.

8. The method according to any one of claims 1 to 7, wherein in a case where the terminal device is a zero-power terminal, the registration acceptance message carries SOR information.

9. The method according to claim 8, wherein the SOR information does not comprise an access technology.

10. The method according to claim 8 or 9, wherein the SOR information comprises a network identifier and access technology list, and the network identifier and access technology list is determined based on a location of the terminal device and/or a frequency band supported by the terminal device.

11. The method according to claim 10, wherein contents of the network identifier and access technology list comprise: a network identifier and access technology of an operator corresponding to the location of the terminal device; and/or a network identifier and access technology of an operator corresponding to the frequency band supported by the terminal device.

12. The method according to any one of claims 7 to 11, wherein SOR information does not comprise SOR-connected mode control information (CMCI).

13. The method according to any one of claims 7 to 12, wherein SOR information comprises a first timer.

14. The method according to any one of claims 1 to 7, wherein in a case where the terminal device is a zero-power terminal, the registration acceptance message does not carry SOR information.

15. The method according to any one of claims 1 to 14, wherein the terminal device comprises a zero-power terminal.

16. A communication method, comprising:
receiving, by a first network element, a second message from a second network element, wherein the second message carries identification information of a terminal device; and
transmitting, by the first network element, a registration acceptance message to the terminal device.

17. The method according to claim 16, wherein the second message further carries steering of roaming (SOR) information.

18. The method according to claim 17, wherein the registration acceptance message carries the SOR information.

19. The method according to claim 18, wherein the registration acceptance message carrying the SOR information comprises:
that the registration acceptance message carries an SOR transparent container, and the SOR transparent container carries the SOR information.

20. The method according to claim 17, further comprising: transmitting, by the first network element, a first message to the terminal device, wherein the first message carries the SOR information.

21. The method according to claim 20, wherein the first message carrying the SOR information comprises:
that the first message carries an SOR transparent container, and the SOR transparent container carries the SOR information.

22. The method according to claim 20 or 21, wherein the first message comprises a downlink non-access stratum (NAS) transport message.

23. The method according to any one of claims 16 to 22, wherein before the first network element receives the second message from the second network element, the method further comprises:
transmitting, by the first network element, a third message to the second network element, wherein the third message carries at least one of the identification information of the terminal device, a location of the terminal device, a frequency band supported by the terminal device, or a first indication, wherein
the first indication is used to indicate whether the terminal device is a zero-power terminal.

24. The method according to claim 23, wherein before the first network element transmits the third message to the second network element, the method further comprises:
receiving, by the first network element, at least one of a registration request message, the location of the terminal device, or a second indication, wherein
the second indication is used to indicate that the terminal device uses a first access technology.

25. The method according to claim 24, wherein the first access technology comprises an access technology used by the zero-power terminal.

26. The method according to claim 24 or 25, further comprising: determining, by the first network element, based on the second indication, whether the terminal device is the zero-power terminal.

27. The method according to claim 26, wherein the registration request message carries at least one of the identification information of the terminal device, the frequency band supported by the terminal device, or the first indication.

28. The method according to any one of claims 23 to 27, wherein the third message comprises a user data management acquisition message or a user equipment context management update message.

29. The method according to any one of claims 16 to 28, wherein in a case where the terminal device is a zero-power terminal, the second message carries SOR information, and the SOR information is determined based on a location of the terminal device and/or a frequency band supported by the terminal device.

30. The method according to claim 29, wherein the SOR information does not comprise an access technology.

31. The method according to claim 29 or 30, wherein the SOR information comprises a network identifier and access technology list, and the network identifier and access technology list is determined based on the location of the terminal device and/or the frequency band supported by the terminal device.

32. The method according to claim 31, wherein contents of the network identifier and access technology list comprise: a network identifier and access technology of an operator corresponding to the location of the terminal device; and/or a network identifier and access technology of an operator corresponding to the frequency band supported by the terminal device.

33. The method according to any one of claims 29 to 32, wherein the SOR information does not comprise SOR-connected mode control information (SOR-CMCI).

34. The method according to any one of claims 29 to 33, wherein the SOR information comprises a first timer.

35. The method according to any one of claims 16 to 28, wherein in a case where the terminal device is a zero-power terminal, the second message does not carry SOR information.

36. The method according to any one of claims 16 to 35, wherein the first network element comprises an access and mobility management function (AMF).

37. The method according to any one of claims 16 to 36, wherein the second network element comprises a unified data management (UDM) or a unified data repository (UDR).

38. The method according to any one of claims 16 to 37, wherein the second message comprises a response message.

39. A communication method, comprising:
transmitting, by a second network element, a second message to a first network element, wherein the second message carries identification information of a terminal device.

40. The method according to claim 39, wherein the second message further carries steering of roaming (SOR) information.

41. The method according to claim 39 or 40, wherein before the second network element transmits the second message to the first network element, the method further comprises:
receiving, by the second network element, a third message from the first network element, wherein the third message carries at least one of the identification information of the terminal device, a location of the terminal device, a frequency band supported by the terminal device, or a first indication, wherein
the first indication is used to indicate whether the terminal device is a zero-power terminal.

42. The method according to claim 41, further comprising:
transmitting, by the second network element, at least one of the identification information of the terminal device, the location of the terminal device, the frequency band supported by the terminal device, or the first indication to a third network element; and
receiving, by the second network element, SOR information from the third network element.

43. The method according to claim 41, further comprising:
determining, by the second network element, SOR information based on at least one of the identification information of the terminal device, the location of the terminal device, the frequency band supported by the terminal device, or the first indication.

44. The method according to any one of claims 41 to 43, wherein the third message comprises a user data management acquisition message or a user equipment context management update message.

45. The method according to any one of claims 40 and 42 to 44, wherein in a case where the terminal device is a zero-power terminal, the SOR information does not comprise an access technology.

46. The method according to any one of claims 40 and 42 to 45, wherein in a case where the terminal device is a zero-power terminal, the SOR information is determined based on a location of the terminal device and/or a frequency band supported by the terminal device.

47. The method according to any one of claims 40 and 42 to 46, wherein the SOR information comprises a network identifier and access technology list, and the network identifier and access technology list is determined based on a location of the terminal device and/or a frequency band supported by the terminal device.

48. The method according to claim 47, wherein contents of the network identifier and access technology list comprise: a network identifier and access technology of an operator corresponding to the location of the terminal device; and/or a network identifier and access technology of an operator corresponding to the frequency band supported by the terminal device.

49. The method according to any one of claims 40 and 42 to 48, wherein the SOR information does not comprise SOR-connected mode control information (SOR-CMCI).

50. The method according to any one of claims 40 and 42 to 49, wherein the SOR information comprises a first timer.

51. The method according to claim 41, further comprising:
in a case where the terminal device is a zero-power terminal, determining, by the second network element, that the second message does not carry SOR information.

52. The method according to any one of claims 39 to 51, wherein the second network element comprises a unified data management (UDM) or a unified data repository (UDR).

53. The method according to any one of claims 39 to 52, wherein the first network element comprises an access and mobility management function (AMF).

54. The method according to claim 42, wherein the third network element comprises an SOR-application function (SOR-AF).

55. The method according to any one of claims 39 to 54, wherein the second message comprises a response message.

56. A communication method, comprising:
receiving, by a third network element, at least one of identification information of a terminal device, a location of the terminal device, a frequency band supported by the terminal device, or a first indication from a second network element, wherein the first indication is used to indicate whether the terminal device is a zero-power terminal; and
determining, by the third network element, steering of roaming (SOR) information of the terminal device.

57. The method according to claim 56, further comprising:
transmitting, by the third network element, the SOR information of the terminal device to the second network element.

58. The method according to claim 56 or 57, wherein in a case where the terminal device is the zero-power terminal, the SOR information does not comprise an access technology.

59. The method according to any one of claims 56 to 58, wherein in a case where the terminal device is the zero-power terminal, the SOR information is determined by the third network element based on the location of the terminal device and/or the frequency band supported by the terminal device.

60. The method according to any one of claims 56 to 59, wherein the SOR information comprises a network identifier and access technology list, and the third network element determines the network identifier and access technology list based on the location of the terminal device and/or the frequency band supported by the terminal device.

61. The method according to claim 60, wherein contents of the network identifier and access technology list comprise: a network identifier and access technology of an operator corresponding to the location of the terminal device; and/or a network identifier and access technology of an operator corresponding to the frequency band supported by the terminal device.

62. The method according to any one of claims 56 to 61, wherein the SOR information does not comprise SOR-connected mode control information (SOR-CMCI).

63. The method according to any one of claims 56 to 62, wherein the SOR information comprises a first timer.

64. The method according to any one of claims 56 to 63, wherein the third network element comprises an SOR-application function (SOR-AF).

65. The method according to any one of claims 56 to 64, wherein the second network element comprises a unified data management (UDM) or a unified data repository (UDR).

66. A communication method, comprising:
receiving, by an access device, a registration request message from a terminal device, wherein the registration request message carries identification information of the terminal device; and
forwarding, by the access device, the registration request message to a first network element.

67. The method according to claim 66, wherein the registration request message carries a first indication and/or a frequency band supported by the terminal device, wherein the first indication is used to indicate whether the terminal device is a zero-power terminal.

68. The method according to claim 66 or 67, further comprising: transmitting, by the access device, an access technology used by the terminal device and/or a location of the terminal device to the first network element.

69. The method according to any one of claims 66 to 68, wherein the first network element comprises an access and mobility management function (AMF).

70. A terminal device, comprising:
a first transmitting unit, configured to transmit a registration request message to a first network element, wherein the registration request message carries identification information of the terminal device; and
a first receiving unit, configured to receive a registration acceptance message from the first network element.

71. A first network element, comprising:
a third receiving unit, configured to receive a second message from a second network element, wherein the second message carries identification information of a terminal device; and
a second transmitting unit, configured to transmit a registration acceptance message to the terminal device.

72. A second network element, comprising:
a fifth transmitting unit, configured to transmit a second message to a first network element, wherein the second message carries identification information of a terminal device.

73. A third network element, comprising:
a seventh receiving unit, configured to receive at least one of identification information of a terminal device, a location of the terminal device, a frequency band supported by the terminal device, or a first indication from a second network element, wherein the first indication is used to indicate whether the terminal device is a zero-power terminal; and
a fourth determining unit, configured to determine steering of roaming (SOR) information of the terminal device.

74. An access device, comprising:
an eighth receiving unit, configured to receive a registration request message from a terminal device, wherein the registration request message carries identification information of the terminal device; and
an eighth transmitting unit, configured to forward the registration request message to a first network element.

75. A communication device, comprising: a processor, a memory and a transceiver, wherein the memory is configured to store a computer program, and the processor is configured to call the computer program stored in the memory and run the computer program, and control the transceiver to perform the method in any one of claims 1 to 15, 16 to 38, 39 to 55, 56 to 65, or 66 to 69.

76. A chip, comprising a processor, wherein the processor is configured to call a computer program from a memory and run the computer program, to enable a device equipped with the chip to perform the method in any one of claims 1 to 15, 16 to 38, 39 to 55, 56 to 65, or 66 to 69.

77. A computer-readable storage medium, configured to store a computer program, wherein the computer program enables a computer to perform the method in any one of claims 1 to 15, 16 to 38, 39 to 55, 56 to 65, or 66 to 69.

78. A computer program product, comprising computer program instructions, wherein the computer program instructions enable a computer to perform the method in any one of claims 1 to 15, 16 to 38, 39 to 55, 56 to 65, or 66 to 69.

79. A computer program, wherein the computer program enables a computer to perform the method in any one of claims 1 to 15, 16 to 38, 39 to 55, 56 to 65, or 66 to 69.
